# EUROPÄISCHE PATENTANMELDUNG

(11) **EP 3 547 516 A1**
(43) Veröffentlichungstag der Anmeldung: **02.10.2019**
(21) Anmeldenummer: 18000311.3
(22) Anmeldetag: 29.03.2018
(51) Int. Cl.: H02M 1/12, H01B 9/02, H02M 1/44, H02K 11/02, H02K 11/22, H05K 9/00

(54) **STROMVERSORGUNGSVORRICHTUNG FÜR EINEN ELEKTROMOTOR**

(71) Anmelder: Diehl AKO Stiftung & Co. KG, 88239 Wangen (DE)
(72) Erfinder: Schmid, Andreas, DE - 88239 Wangen im Allgäu (DE)
(74) Vertreter: Diehl Patentabteilung

(57) **Zusammenfassung**

Eine Stromversorgungsvorrichtung für einen Elektromotor weist einen Umrichter (10) mit einem Eingang (12) zum Anschließen des Umrichters (10) an eine Stromversorgungsquelle (L, N, PE), einem Wechselrichter (16) zum Bereitstellen einer Wechselspannung für den Elektromotor (22), und einer mit einem Schutzleiter (PE) der Stromversorgungsquelle (L, N, PE) verbundenen Erdung (PE10) auf. Die Stromversorgungsvorrichtung weist außerdem eine Stromverbindungseinrichtung (28) zum Verbinden des Elektromotors (22) mit dem Wechselrichter (16) und der Erdung (PE10) des Umrichters (10) auf, wobei die Stromverbindungseinrichtung (28) mehrere Motorphasenleiter (U, V, W) und einen Schutzleiter (PE28) enthält. Zum Verbessern der elektromagnetischen Verträglichkeit der Stromversorgungsvorrichtung ist ferner ein Ausgangsfilter (34) vorgesehen, in dem die mehreren Motorphasenleiter (U, V, W) und der Schutzleiter (PE28) der Stromverbindungseinrichtung (28) jeweils um einen Induktionskern (36) gewickelt sind.

## Beschreibung

Die vorliegende Erfindung betrifft eine Stromversorgungsvorrichtung für einen Elektromotor mit einem Umrichter sowie ein Motorkabel, eine Motorkabelvorrichtung und eine Umrichtervorrichtung für eine solche Stromversorgungsvorrichtung.

Es ist allgemein bekannt, dass elektrische Geräte im Betrieb grundsätzlich elektromagnetische Strahlungen aussenden, die elektromagnetische Störungen bei anderen Geräten hervorrufen können. Es ist deshalb ein ständiges Bestreben, die von elektrischen Geräten ausgehende elektromagnetische Strahlung zu minimieren, zum Beispiel durch Reduzieren und/oder Abschirmen der Strahlung. Es muss sichergestellt werden, dass die elektromagnetische Verträglichkeit (EMV) der elektrischen Geräte zulässige Grenzen nicht überschreitet.

Elektromotoren werden häufig von Umrichtern mit Strom versorgt. Zum Minimieren der vom Umrichter ausgehenden elektromagnetischen Störstrahlung werden beispielsweise Filter in den Umrichter integriert (vgl. z.B. DE 103 27 598 A1) oder Netzfilter zwischen den Umrichter und das Versorgungsnetz geschaltet (vgl. z.B. DE 10 2007 022 503 A1). Allerdings entstehen durch das Takten der IGBTs des Umrichters am Ausgang des Umrichters steile Spannungsflanken, die im Zusammenspiel mit parasitären Kapazitäten zwischen den Motorphasen und dem Motorgehäuse zu kapazitiven Störströmen führen können. Die DE 199 63 301 A1 schlägt diesbezüglich eine ferromagnetische Umhüllung zur Abschirmung des Motorkabels vor, um die Ableitströme sowohl im Motorkabel als auch im Elektromotor zu verringern, wobei die äußere Abschirmung zugleich als Schutzleiterverbindung verwendet werden kann. Dennoch fließen bei dieser Anordnung kapazitive Störströme weiterhin über das Motorgehäuse und das daran angeschlossene Erdungssystem über einen langen Weg über den Schutzleiter zum Umrichter zurück. Da dieser Rückkoppelpfad durch seine geometrischen Ausmaße üblicherweise eine sehr große Fläche aufspannt, führen diese Störströme weiterhin zu einer hohen Störemission von diesem Leitersystem.

Es ist daher die Aufgabe der vorliegenden Erfindung, die elektromagnetische Verträglichkeit einer Stromversorgungsvorrichtung für einen Elektromotor durch Reduzieren der Störstrahlungen vom Leitersystem zwischen Elektromotor und Umrichter zu verbessern.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Die Stromversorgungsvorrichtung für einen Elektromotor gemäß der Erfindung weist einen Umrichter mit einem Eingang zum Anschließen des Umrichters an eine Stromversorgungsquelle, einem Wechselrichter zum Bereitstellen einer Wechselspannung für den Elektromotor und einer mit einem Schutzleiter der Stromversorgungsquelle verbundenen Erdung, sowie eine Stromverbindungseinrichtung zum Verbinden des Elektromotors mit dem Wechselrichter und der Erdung des Umrichters, wobei die Stromverbindungseinrichtung mehrere Motorphasenleiter und einen Schutzleiter enthält, auf. Erfindungsgemäß ist ferner ein Ausgangsfilter vorgesehen, in dem die mehreren Motorphasenleiter und der Schutzleiter der Stromverbindungseinrichtung jeweils um einen Induktionskern gewickelt sind.

Erfindungsgemäß wird vorgeschlagen, sowohl die Motorphasenleiter als auch den Schutzleiter der Stromverbindungseinrichtung zwischen dem Wechselrichter des Umrichters und dem Elektromotor um einen Induktionskern zu wickeln. Vorzugsweise werden die mehreren Motorphasenleiter und der Schutzleiter der Stromverbindungseinrichtung in dem Ausgangsfilter um einen gemeinsamen Induktionskern gewickelt. Vorzugsweise werden die mehreren Motorphasenleiter und der Schutzleiter der Stromverbindungseinrichtung gleichsinnig um den (gemeinsamen) Induktionskern gewickelt. Die Wicklung der Motorphasenleiter und des Schutzleiters um den Induktionskern erfolgt vorzugsweise mit zwei, drei, vier oder mehr Windungen. Der Induktionskern ist vorzugsweise aus einem ferromagnetischen Material oder einem Ferrit gebildet.

Durch das (vorzugsweise gleichsinnige) Wickeln sowohl der Motorphasenleiter als auch des Schutzleiters um einen (vorzugsweise gemeinsamen) Induktionskern wird eine Gleichtaktdrossel gebildet, wodurch zwischen den Motorphasenleitern und dem Schutzleiter der Stromverbindungseinrichtung ein Transformator mit einem Übersetzungsverhältnis von 1 entsteht. Bei Auftreten eines kapazitiven Störstroms in einem Motorphasen leiter wird eine Spannung in dieser Wicklung induziert. Da die Gleichtaktdrossel einen Transformator mit Übersetzungsverhältnis 1 darstellt, wird die gleiche Spannung auch in der Wicklung des Schutzleiters induziert. Hierdurch sinkt die dem Elektromotor zugewandte Seite der Schutzleiterwicklung spannungsmäßig ins Negative. Da die Erde am Motorgehäuse über das Erdungssystem nach wie vor spannungsmäßig auf 0 V liegt, werden die Störungen gezwungen, über den Induktionskern zurück zum Umrichter zu fließen. Entsprechend können die unerwünschten Störströme, welche den Elektromotor über das an das Motorgehäuse angeschlossene Erdungssystem verlassen, drastisch reduziert werden. Ein weiterer Vorteil des Rückflusses der Störungen zum Umrichter liegt darin, dass die Störungen auf ihrem Weg vom Umrichter zum Elektromotor und wieder zurück mit unterschiedlicher Stromrichtung verlaufen. Da die aufgespannte Fläche von Hin- und Rückleitern minimal groß ist, kompensieren sich die Magnetfelder des vorlaufenden und zurücklaufenden Störstroms, sodass die magnetische Störemission der Stromverbindungseinrichtung stark reduziert werden kann. Die erfindungsgemäße Entstörmaßnahme ist besonders vorteilhaft, wenn das Motorgehäuse des Elektromotors mit einem langen Erdungssystem (z.B. Hydraulikrohre) verbunden ist.

Mit der erfindungsgemäßen Stromversorgungsvorrichtung können insbesondere Störspannungen im Frequenzbereich von etwa 150 kHz bis 30 MHz, Störleistungen im Frequenzbereich von etwa 30 MHz bis 300 MHz sowie Störfeldstärken im Frequenzbereich von etwa 30 MHz bis 1 GHz verbessert werden. Bei einem untersuchten Beispiel für einen Elektromotor einer Wärmepumpe konnte beispielsweise eine deutliche Reduzierung des Störpegels im Frequenzbereich von etwa 8 MHz bis 30 MHz (Störspannung) und von etwa 30 MHz bis 50 MHz (Störleistung, Störfeldstärke) festgestellt werden.

In einer Ausführungsvariante der Erfindung weist der Umrichter einen Ausgang auf, dessen Ausgangsanschlüsse mit dem Wechselrichter und der Erdung verbunden sind, weist die Stromverbindungseinrichtung ein Motorkabel auf, das zumindest Abschnitte der mehreren Motorphasenleiter und des Schutzleiters enthält und an den Ausgang des Umrichters angeschlossen ist oder anschließbar ist, und ist das Ausgangsfilter zwischen dem Wechselrichter und dem Ausgang des Umrichters vorgesehen. D.h. das Ausgangsfilter ist an einem Leitungsabschnitt der Stromverbindungseinrichtung innerhalb des Umrichters vorgesehen und so in den Umrichter integriert. Bei dieser Ausführungsvariante sind der Umrichter und das Ausgangsfilter vorzugsweise in einem gemeinsamen Umrichtergehäuse angeordnet, wobei dieses Umrichtergehäuse bevorzugt mit der Erdung des Umrichters verbunden ist.

In einer anderen Ausführungsvariante der Erfindung weist der Umrichter einen Ausgang auf, dessen Ausgangsanschlüsse mit dem Wechselrichter und der Erdung verbunden sind, weist die Stromverbindungseinrichtung ein Motorkabel auf, das zumindest Abschnitte der mehreren Motorphasenleiter und des Schutzleiters enthält, und ist das Ausgangsfilter zwischen dem Ausgang des Umrichters und dem Motorkabel vorgesehen. D.h. das Ausgangsfilter ist als eine separate Komponente zu Umrichter und Motorkabel ausgestaltet und zwischen diesen beiden Komponenten angeordnet.

In einer noch anderen Ausführungsvariante der Erfindung weist der Umrichter einen Ausgang auf, dessen Ausgangsanschlüsse mit dem Wechselrichter und der Erdung verbunden sind, weist die Stromverbindungseinrichtung ein Motorkabel auf, das zumindest Abschnitte der mehreren Motorphasenleiter und des Schutzleiters enthält und an den Ausgang des Umrichters angeschlossen ist oder anschließbar ist, und ist das Ausgangsfilter in das Motorkabel integriert.

In einer weiteren Ausgestaltung der Erfindung weist das Motorkabel der Stromverbindungseinrichtung eine Abschirmung auf. Diese Abschirmung des Motorkabels weist vorzugsweise wenigstens eine Erdungsverbindung zur Verbindung der Abschirmung mit der Erdung des Umrichters und/oder mit einem Erdungsanschluss des Elektromotors auf. Durch ein derart geschirmtes Motorkabel kann verhindert werden, dass es zwischen dem Motorkabel und der Umgebung (z.B. benachbarte Kabel, leitfähige Gehäuseteile, usw.) zu kapazitiven oder induktiven Kopplungen kommen kann.

Besonders vorteilhaft weist die Abschirmung des Motorkabels eine beidseitige Erdungsverbindung zur Verbindung der Abschirmung mit der Erdung des Umrichters und/oder mit einem Erdungsanschluss des Elektromotors auf.

In einer noch weiteren Ausgestaltung der Erfindung kann das Motorkabel der Stromverbindungseinrichtung zusätzlich oder alternativ zur geerdeten Abschirmung eine ferromagnetische Umhüllung aufweisen. Diese ferromagnetische Umhüllung umgibt vorzugsweise zumindest die Motorphasenleiter und ist vorzugsweise aus einem ferromagnetischen Material oder Ferrit gebildet. Bezüglich weiterer Aspekte und Vorteile einer solchen Umhüllung wird auf die eingangs genannte DE 199 63 301 A1 verwiesen.

In einer weiteren Ausgestaltung der Erfindung kann der Schutzleiter der Stromverbindungseinrichtung zwischen dem Motorkabel und dem Elektromotor zudem mit einer weiteren Abschirmung versehen sein. Diese Ausgestaltung ist insbesondere bei größeren Abständen zwischen dem Motorkabel und dem Erdungsanschluss des Motorgehäuses von Vorteil. Da bei der erfindungsgemäßen Stromversorgungsvorrichtung kapazitive Störströme über den Schutzleiter zum Umrichter zurückfließen, wird durch die Leitungsabschnitte der Motorphasenleiter und des Schutzleiters zwischen dem Motorkabel und dem Elektromotor eine magnetische Antenne gebildet wird, die bei einem größeren Abstand des Erdungsanschlusses eine besonders große Fläche aufspannt. Es würde daher in diesem Bereich ein Störfeld gebildet werden, das aber durch die weitere Abschirmung des Schutzleiters deutlich reduziert werden kann. Bei einem untersuchten Beispiel für einen Elektromotor einer Wärmepumpe konnte beispielsweise eine deutliche Reduzierung der abgestrahlten Emission im Frequenzbereich von etwa 30 MHz bis 50 MHz (Störfeldstärke) gemessen werden

In einer weiteren Ausgestaltung der Erfindung weist der Umrichter einen Gleichrichter zum Umwandeln einer Wechselspannung von der Stromversorgungsquelle in eine Gleichspannung und einen Gleichspannungszwischenkreis zwischen dem Gleichrichter und dem Wechselrichter auf. In diesem Fall ist der Schutzleiter der Stromverbindungseinrichtung bevorzugt kapazitiv mit dem Gleichstromzwischenkreis des Umrichters verbunden.

Gegenstand der Erfindung ist auch ein Motorkabel zum Verbinden eines Elektromotors mit einem Umrichter, das mehrere Motorphasenleiter und einen Schutzleiter enthält, wobei die mehreren Motorphasenleiter und der Schutzleiter jeweils zumindest abschnittsweise um einen Induktionskern gewickelt sind. Dieses Motorkabel ist insbesondere für die oben als drittes genannte Ausführungsvariante der Stromversorgungsvorrichtung einsetzbar, bei welcher das Ausgangsfilter in das Motorkabel integriert ist.

Vorzugsweise sind die mehreren Motorphasenleiter und der Schutzleiter um einen gemeinsamen Induktionskern gewickelt. Vorzugsweise sind die mehreren Motorphasenleiter und der Schutzleiter gleichsinnig um den (gemeinsamen) Induktionskern gewickelt.

Die Wicklung der Motorphasenleiter und des Schutzleiters um den Induktionskern erfolgt vorzugsweise mit zwei, drei, vier oder mehr Windungen. Der Induktionskern ist vorzugsweise aus einem ferromagnetischen Material oder einem Ferrit gebildet.

Gegenstand der Erfindung ist ferner eine Motorkabelvorrichtung zum Verbinden eines Elektromotors mit einem Umrichter, welche ein Motorkabel mit mehreren Motorphasenleitern und einem Schutzleiter sowie ein Ausgangsfilter, das auf einer dem Umrichter zugewandten Seite des Motorkabels vorgesehen ist und in dem die mehreren Motorphasenleiter und der Schutzleiter jeweils um einen Induktionskern gewickelt sind, aufweist. Diese Motorkabelvorrichtung ist insbesondere für die oben als zweites genannte Ausführungsvariante der Stromversorgungsvorrichtung einsetzbar, bei welcher das Ausgangsfilter als eine separate Komponente zwischen dem Umrichter und dem Motorkabel vorgesehen ist.

Vorzugsweise sind die mehreren Motorphasenleiter und der Schutzleiter um einen gemeinsamen Induktionskern gewickelt. Vorzugsweise sind die mehreren Motorphasenleiter und der Schutzleiter gleichsinnig um den (gemeinsamen) Induktionskern gewickelt. Die Wicklung der Motorphasenleiter und des Schutzleiters um den Induktionskern erfolgt vorzugsweise mit zwei, drei, vier oder mehr Windungen. Der Induktionskern ist vorzugsweise aus einem ferromagnetischen Material oder einem Ferrit gebildet.

Gegenstand der Erfindung ist ferner eine Umrichtervorrichtung zur Stromversorgung eines Elektromotors, aufweisend einen Umrichter mit einem Eingang zum Anschließen des Umrichters an eine Stromversorgungsquelle, einem Wechselrichter zum Bereitstellen einer Wechselspannung für den Elektromotor und einer mit einem Schutzleiter der Stromversorgungsquelle verbundenen Erdung; Leitungsabschnitte mehrerer Motorphasenleiter, die mit dem Wechselrichter des Umrichters verbunden sind, und eines Schutzleiters, der mit der Erdung des Umrichters verbunden ist; und ein Ausgangsfilter, in dem die mehreren Motorphasenleiter und der Schutzleiter jeweils um einen Induktionskern gewickelt sind. Diese Umrichtervorrichtung ist insbesondere für die oben als erstes genannte Ausführungsvariante der Stromversorgungsvorrichtung einsetzbar, bei welcher das Ausgangsfilter in den Umrichter integriert ist.

Vorzugsweise sind die mehreren Motorphasenleiter und der Schutzleiter um einen gemeinsamen Induktionskern gewickelt. Vorzugsweise sind die mehreren Motorphasenleiter und der Schutzleiter gleichsinnig um den (gemeinsamen) Induktionskern gewickelt. Die Wicklung der Motorphasenleiter und des Schutzleiters um den Induktionskern erfolgt vorzugsweise mit zwei, drei, vier oder mehr Windungen. Der Induktionskern ist vorzugsweise aus einem ferromagnetischen Material oder einem Ferrit gebildet. Außerdem sind der Umrichter und das Ausgangsfilter vorzugsweise in einem gemeinsamen Umrichtergehäuse angeordnet, das bevorzugt mit der Erdung des Umrichters verbunden ist.

Obige sowie weitere Merkmale und Vorteile der Erfindung werden aus der nachfolgenden Beschreibung von bevorzugten, nicht-einschränkenden Ausführungsbeispielen anhand der beiliegenden Zeichnung besser verständlich. Darin zeigen, zum Teil schematisch:
- Fig. 1: ein Blockschaltbild einer Stromversorgungsvorrichtung gemäß einem ersten Ausführungsbeispiel der vorliegenden Erfindung;
- Fig. 2: ein Blockschaltbild einer Stromversorgungsvorrichtung gemäß einem zweiten Ausführungsbeispiel der vorliegenden Erfindung;
- Fig. 3: ein Blockschaltbild einer Stromversorgungsvorrichtung gemäß einem dritten Ausführungsbeispiel der vorliegenden Erfindung; und
- Fig. 4: ein Blockschaltbild einer Stromversorgungsvorrichtung gemäß einem vierten Ausführungsbeispiel der vorliegenden Erfindung.

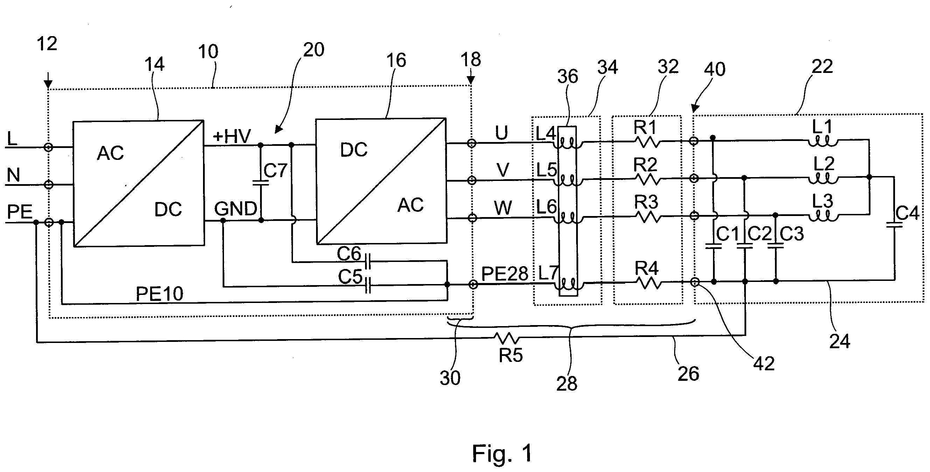

Fig. 1 zeigt ein erstes Ausführungsbeispiel einer Stromversorgungsvorrichtung gemäß der Erfindung, an die ein Elektromotor zum Beispiel einer Wärmepumpe angeschlossen ist.

Die Stromversorgungsvorrichtung weist insbesondere einen Umrichter 10 und eine Stromverbindungseinrichtung 28 auf.

Der Umrichter 10 hat einen Eingang 12, an den eine Stromversorgungsquelle (z.B. ein Stromnetz) mit einem Außenleiter L, einem Neutralleiter N und einem Schutzleiter PE angeschlossen ist bzw. anschließbar ist. Im Umrichter 10 sind ein Gleichrichter 14 zum Umwandeln einer Wechselspannung von dieser Stromversorgungsquelle in eine Gleichspannung und ein Wechselrichter 16 zum Bereitstellen einer mehrphasigen Wechselspannung für den Elektromotor 22 vorhanden. Die mehrphasige Wechselspannung kann an entsprechenden Ausgangsanschlüssen eines Ausgangs 18 des Umrichters 10 abgegriffen werden. Zusätzlich ist im Umrichter 10 zwischen dem Gleichrichter 14 und dem Wechselrichter 16 ein Gleichspannungszwischenkreis 20 mit einer Kapazität C7 vorgesehen.

Durch den Umrichter 10 ist zudem eine Erdung PE10 geführt, die einerseits über einen entsprechenden Eingangsanschluss des Eingangs 12 mit dem Schutzleiter PE der Stromversorgungsquelle verbunden ist und andererseits mit einem entsprechenden Ausgangsanschluss des Ausgangs 18 verbunden ist.

Der Elektromotor 22 ist über eine Stromverbindungseinrichtung 28 mit dem Umrichter 10 verbunden. Diese Stromverbindungseinrichtung 28 enthält mehrere (hier: drei) Motorphasenleiter U, V, W und einen Schutzleiter PE28. Die Motorphasenleiter U, V, W sind einerseits mit den entsprechenden Ausgängen des Wechselrichters 16 bzw. den entsprechenden Ausgangsanschlüssen des Ausgangs 18 des Umrichters 10 verbunden und andererseits mit den entsprechenden Motoranschlüssen 40 bzw. den mit diesen verbundenen Motorwicklungen L1, L2, L3 des Elektromotors 22 verbunden. Der Schutzleiter PE28 der Stromverbindungseinrichtung 28 ist einerseits mit dem entsprechenden Ausgangsanschluss des Ausgangs 18 des Umrichters 10 und damit mit dem Schutzleiter PE der Stromversorgungsquelle verbunden und andererseits mit einem Erdungsanschluss 42 (z.B. in Form einer Erdungsschraube) des Motorgehäuses 24 des Elektromotors 22 verbunden. Wie in Fig. 1 dargestellt, sind die Motorwicklungen L1, L2, L3 kapazitiv mit dem Motorgehäuse 24 gekoppelt (C1, C2, C3, C4). Außerdem ist der Schutzleiter PE28 der Stromverbindungseinrichtung 28 kapazitiv mit dem Gleichspannungszwischenkreis 20 des Umrichters 10 gekoppelt (C5, C6).

Die Stromverbindungseinrichtung 28 umfasst zudem mehrere Abschnitte, durch die jeweils die mehreren Motorphasenleiter U, V, W und der Schutzleiter PE28 geführt sind. Ein erster Leitungsabschnitt 30 befindet sich innerhalb des Umrichters 10 zwischen dem Wechselrichter 16 und den Ausgangsanschlüssen des Ausgangs 18. Den Hauptbestandteil der Stromverbindungseinrichtung 28 bildet ein Motorkabel 32 (mit den Leitungswiderständen R1, R2, R3, R4).

Die Stromverbindungseinrichtung 28 weist zudem ein Ausgangsfilter 34 auf. In diesem Ausgangsfilter 34 sind sowohl die Motorphasenleiter U, V, W als auch der Schutzleiter PE28 gleichsinnig mit beispielsweise drei Windungen um einen gemeinsamen Induktionskern 36 gewickelt, der aus einem ferromagnetischen Material oder Ferrit gebildet ist. Fig. 1 zeigt die entsprechenden Wicklungen L4, L5, L6 der Motorphasenleiter U, V, W um den Induktionskern 36 und die entsprechende Wicklung L7 des Schutzleiters PE28 um den Induktionskern 36.

Beim Takten der Motorphasen kann es aufgrund der Kapazitäten C1, C2, C3, C4 im Elektromotor 22 zu Störströmen kommen, die vom Umrichter 10 über diese Motorkapazitäten C1, C2, C3, C4 in das mit dem Motorgehäuse 24 verbundene Erdungssystem 26 abfließen. Da dieses Erdungssystem 26 aufgrund seiner geometrischen Ausmaße üblicherweise eine große Fläche aufspannt, würde dieser Störstrom zu einer großen Störaussendung führen. Diese Störaussendung wird durch das Ausgangsfilter 34 der Stromverbindungseinrichtung 28 minimiert.

Durch die Wicklung der Motorphasenleiter U, V, W und des Schutzleiters PE28 um den Induktionskern 36 wird eine Gleichtaktdrossel gebildet, sodass zwischen den Motorphasenleitern U, V, W und dem Schutzleiter PE28 ein Transformator mit einem Übersetzungsverhältnis 1 entsteht. Wird beispielsweise die Motorphase U getaktet, so entsteht in der Wicklung L4 des Motorphasenleiters U ein Stromfluss, der in der Wicklung L4 einen Spannungsabfall verursacht. Da die Wicklung L4 und die Wicklung L7 über den Induktionskern 36 magnetisch miteinander gekoppelt sind, wird auch in der Wicklung L7 des Schutzleiters PE28 die gleiche Spannung induziert. Infolgedessen sinkt der dem Elektromotor 22 zugewandte (in Fig. 1 rechte Anschluss) der Wicklung L7 spannungsmäßig ins Negative.

Für den kapazitiven Störstrom auf dem Motorgehäuse 24 gibt es grundsätzlich zwei mögliche Wege, um zum Umrichter 10 zurückzufließen. Der Störstrom kann entweder über das Motorkabel 32 (Widerstand R4) und den Induktionskern 36 oder über das am Motorgehäuse 24 angeschlossene Erdungssystem 26 (Widerstand R5) zum Umrichter 10 zurückfließen. Die Widerstände R4 und R5 sind beide mit dem Motorgehäuse 24 verbunden, sodass die dem Elektromotor 22 zugewandten (in Fig. 1 rechten) Anschlüsse dieser beiden Widerstände auf gleichem Spannungspotenzial liegen. Da der dem Umrichter 10 zugewandte (in Fig. 1 linke) Anschluss des Widerstands R4 durch die oben beschriebene Wirkung des Induktionskerns 36 spannungsmäßig gegen Erde negativ wird, ist der Spannungsabfall über dem Widerstand R4 größer als der Spannungsabfall über dem Widerstand R5 (falls beide Widerstände gleich groß sind). Infolgedessen wird der Störstrom dazu gezwungen, auf direktem Weg vom Motorgehäuse 24 über den Schutzleiter PE28 zurück zum Umrichter 10 zurückzufließen. Im Umrichter 10 wird mit den zwei Kondensatoren C5 und C6 dafür gesorgt, dass sich der Störstrom kapazitiv zum Zwischenkreis 20 (Kondensator C7) kurzschließen kann.

Ein weiterer Vorteil des Rückflusses der Störströme über den Schutzleiter PE28 des Motorkabels 32 ist die Tatsache, dass die Störungen auf ihrem Weg vom Umrichter zum Elektromotor 22 und wieder zurück im gleichen Motorkabel 32 mit unterschiedlicher Stromrichtung verlaufen. Da die aufgespannte Fläche von Hin- und Rückleiter minimal groß ist, kompensieren sich die Magnetfelder des vorlaufenden und des zurücklaufenden Störstroms. Durch diesen Mechanismus wird die Störemission des Motorkabels 32 bzw. der Stromverbindungseinrichtung 28 stark reduziert.

Die erfindungsgemäße Entstörmaßnahme zwischen dem Wechselrichter 16 des Umrichters 10 und dem Elektromotor 22 ist besonders effektiv, wenn das Motorgehäuse 24 mit einem langen Erdungssystem 26 (z.B. Hydraulikrohre) verbunden ist.

Bei einem Elektromotor 32 einer Wärmepumpe haben beispielhafte Messungen eine deutliche Reduzierung des Störpegels im Frequenzbereich von etwa 8 MHz bis 50 MHz bewirkt.

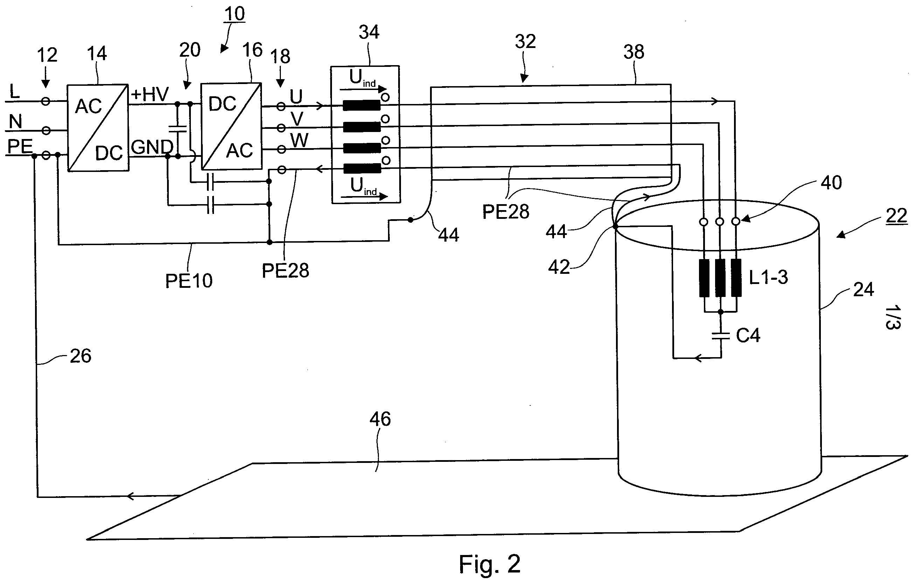

Fig. 2 zeigt ein zweites Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie im ersten Ausführungsbeispiel gekennzeichnet.

Die Stromversorgungsvorrichtung des zweiten Ausführungsbeispiels unterscheidet sich von jener des ersten Ausführungsbeispiels dadurch, dass die Stromverbindungseinrichtung 28 ein geschirmtes Motorkabel 32 enthält. D.h. das Motorkabel 32 weist eine (elektrisch leitfähige) Abschirmung 38 auf. Diese Abschirmung 38 ist einerseits über eine Erdungsverbindung 44 mit der Erdung PE10 des Umrichters 10 und andererseits über eine Erdungsverbindung 44 mit einem Erdungsanschluss 42 des Elektromotors 22 bzw. seines Motorgehäuses 24 verbunden.

Durch eine derartige Abschirmung 38 des Motorkabels 32 kann verhindert werden, dass es zwischen dem Motorkabel 32 und der Umgebung (z.B. benachbarte Kabel, leitfähige Gehäuseteile, usw.) zu kapazitiver oder induktiver Kopplung kommt.

In Fig. 2 ist im Vergleich zu Fig. 1 außerdem die Verbindung des Motorgehäuses 24 über das Gerätegehäuse 46 (z.B. einer Wärmepumpe) mit dem Erdungssystem 26 gezeigt.

Im Übrigen entsprechen Aufbau und Wirkungsweise der Stromversorgungsvorrichtung von Fig. 2 jenen der Stromversorgungsvorrichtung des ersten Ausführungsbeispiels von Fig. 1.

In den beiden Ausführungsbeispielen von Fig. 1 und 2 ist das Ausgangsfilter 34 jeweils als separate Komponente zwischen dem Umrichter 10 und dem Motorkabel 32 vorgesehen. In anderen Ausführungsvarianten der Erfindung kann das Ausgangsfilter 34 auch in das Motorkabel 32 integriert sein. Diese Varianten kommen insbesondere dann in Betracht, wenn das Motorkabel 32 über einzelne Leitungen bzw. Adern U, V, W, PE28 verfügt.

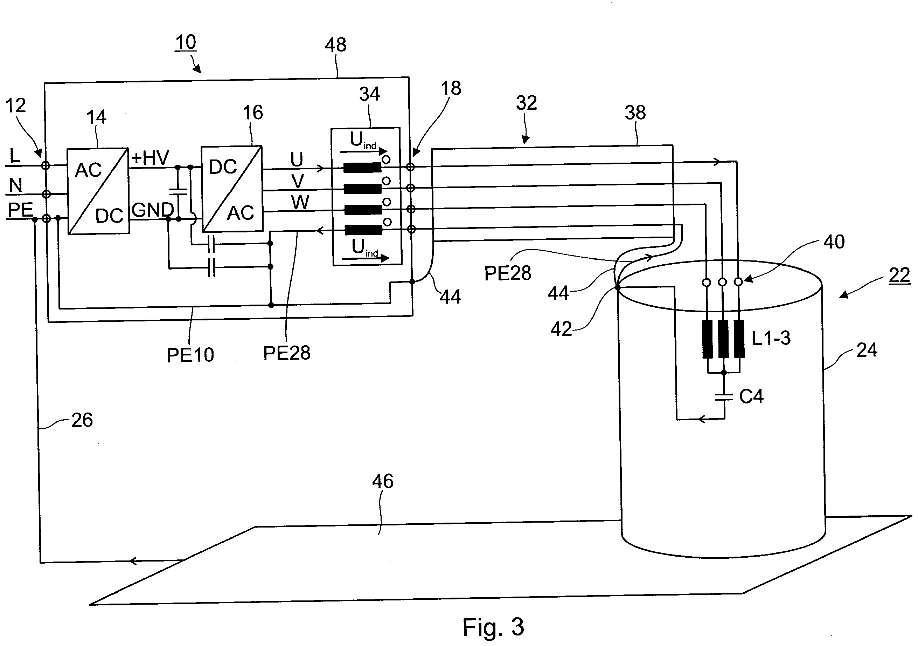

Fig. 3 zeigt ein drittes Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie in den ersten beiden Ausführungsbeispielen gekennzeichnet.

Die Stromversorgungsvorrichtung des dritten Ausführungsbeispiels unterscheidet sich von jener des zweiten Ausführungsbeispiels dadurch, dass das Ausgangsfilter 34 in den Umrichter 10 integriert ist. Der Umrichter 10 könnte von einem nicht dargestellten Gehäuse aus Kunststoff oder Metall umgeben seein.

Das Ausgangsfilter 34 ist zwischen den Ausgangsanschlüssen des Ausgangs 18 des Umrichters 10 einerseits und dem Wechselrichter 16 und der Erdung PE10 des Umrichters 10 andererseits angeschlossen. Außerdem sind der Umrichter 10 und das Ausgangsfilter 34 in einem gemeinsamen Umrichtergehäuse 48 untergebracht.

Bei dieser Ausgestaltung der Stromversorgungsvorrichtung können die Längen der ungeschirmten Leitungsabschnitte der Motorphasenleiter U, V, W und des Erdungsleiters PE28 zwischen dem Motorkabale 32 und dem Umrichter 10 sowie der Erdungsverbindung des Motorkabels 44 zur Erdung PE10 des Umrichters 10 relativ klein gehalten werden.

Im Übrigen entsprechen Aufbau und Wirkungsweise der Stromversorgungsvorrichtung von Fig. 3 jenen der Stromversorgungsvorrichtung des zweiten Ausführungsbeispiels von Fig. 2 und deren Ausführungsvarianten.

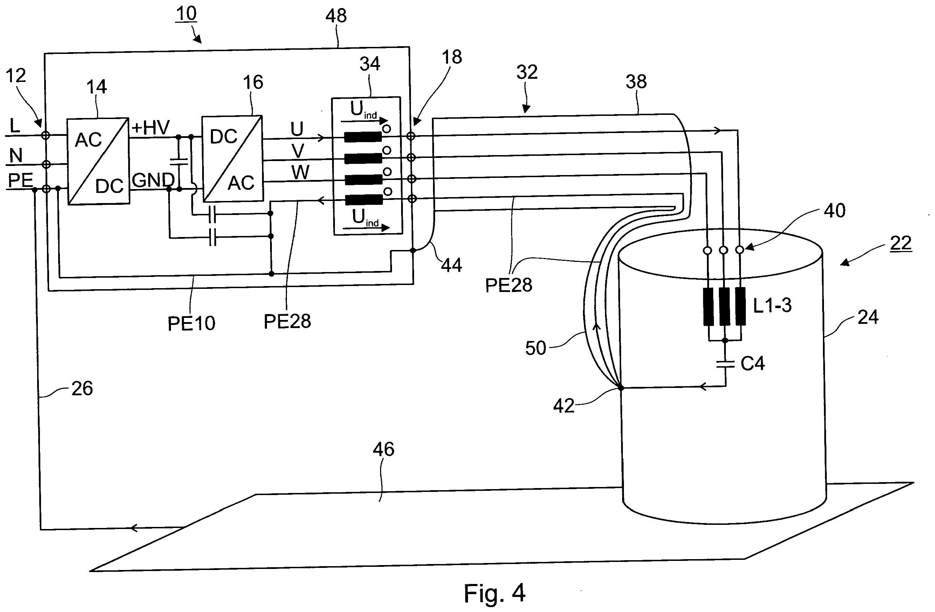

Fig. 4 zeigt ein viertes Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie in den vorherigen Ausführungsbeispielen gekennzeichnet.

Da der ungeschirmte Teil der Motorphasenleiter U, V, W und des Schutzleiters PE28 zwischen dem Motorkabel 32 und dem Motorgehäuse 24 des Elektromotors 22 anschlussbedingt in der Regel nicht unmittelbar nebeneinander verlaufen, entsteht eine magnetische Antenne, deren Abstrahlwirkung direkt proportional zur zwischen der von dem jeweiligen Motorphasenleiter (z.B. Phase U) und dem Schutzleiter PE28 aufgespannten Fläche ist. Falls der Erdungsanschluss 42 des Elektromotors 22 nahe an den Motoranschlüssen 40 liegt, spannt die so entstehende magnetische Antenne nur eine relativ geringe Fläche auf. Da der Erdungsanschluss 42 des Elektromotors 22 aber typischerweise vom Motorhersteller vorgegeben wird, hat der Hersteller der Stromversorgungsvorrichtung in der Regel keinen Einfluss auf die Lage dieses Erdungsanschlusses 42.

Das vierte Ausführungsbeispiel unterscheidet sich vom dritten Ausführungsbeispiel dadurch, dass sich der Erdungsanschluss 42 des Motorgehäuses 24 des Elektromotors 22 weiter entfernt von den Motoranschlüssen 40 für die Motorphasenleiter U, V, W befindet (weiter unten am Motorgehäuse 24 in Fig. 4).

Für die abgestrahlte Störaussendung ergibt sich dadurch im Vergleich zum dritten Ausführungsbeispiel eine magnetische Antenne mit einer wesentlich größeren aufgespannten Fläche zwischen dem ungeschirmten Teil des jeweiligen Motorphasenleiters (z.B. Phase U) und dem Schutzleiter PE28 des Motorkabels 32 am Elektromotor 22. Infolgedessen würde die Höhe der von dieser magnetischen Antenne abgestrahlten Störaussendung erheblich ansteigen.

Um diesen Nachteil zu reduzieren, weist die Abschirmung 38 des Motorkabels 32 im vierten Ausführungsbeispiel von Fig. 4 einer weitere Abschirmung 50 auf, die den Leitungsabschnitt des Schutzleiters PE28 zwischen dem Motorkabel 32 und dem Erdungsanschluss 42 am Motorgehäuse 24 des Elektromotors 22 abschirmt.

Durch diese Maßnahme wird der ungeschirmte Teil der magnetischen Antenne auf ein Minimum reduziert, da nur noch das Kabelende der Motorphasenleiter U, V, W zwischen dem Motorkabel 32 und dem Elektromotor 22 ungeschirmt ist. Infolgedessen führt die weitere Abschirmung 50 des Schutzleiters PE28 in Kombination mit dem erfindungsgemäßen Ausgangsfilter 34 zu einer starken Reduzierung der abgestrahlten Störemissionen.

Im Übrigen entsprechen Aufbau und Wirkungsweise der Stromversorgungsvorrichtung von Fig. 4 jenen der Stromversorgungsvorrichtung des dritten Ausführungsbeispiels von Fig. 3.

In den Ausführungsbeispielen von Fig. 2 bis 4 ist das Motorkabel 32 der Stromverbindungseinrichtung 28 jeweils mit einer geerdeten Abschirmung 38 versehen. Alternativ oder zusätzlich kann das Motorkabel 32 auch eine ferromagnetische Umhüllung aufweisen, die zumindest die Motorphasenleiter U, V, W umgibt und aus einem ferromagnetischen Material oder Ferrit gebildet ist. Bezüglich weiterer Aspekte und Vorteile einer solchen Umhüllung wird auf die eingangs genannte DE 199 63 301 A1 verwiesen.

### BEZUGSZIFFERNLISTE

- 10: Umrichter
- 12: Eingang
- 14: Gleichrichter
- 16: Wechselrichter
- 18: Ausgang
- 20: Gleichspannungszwischenkreis
- 22: Elektromotor
- 24: Motorgehäuse
- 26: Erdungssystem
- 28: Stromverbindungseinrichtung
- 30: Leitungsabschnitt innerhalb Umrichter
- 32: Motorkabel
- 34: Ausgangsfilter
- 36: Induktionskern
- 38: Abschirmung Motorkabel
- 40: Motoranschlüsse
- 42: Erdungsanschluss
- 44: Erdungsverbindung Abschirmung
- 46: Gerätegehäuse
- 48: Umrichtergehäuse
- 50: weitere Abschirmung Umrichter

- L: Außenleiter einer Stromversorgungsquelle
- N: Neutralleiter einer Stromversorgungsquelle
- PE: Schutzleiter einer Stromversorgungsquelle
- PE10: Erdung des Umrichters
- PE28: Schutzleiter der Stromverbindungseinrichtung
- U, V, W: Motorphasenleiter der Stromverbindungseinrichtung

## Patentansprüche

1. Stromversorgungsvorrichtung für einen Elektromotor, aufweisend:
einen Umrichter (10) mit einem Eingang (12) zum Anschließen des Umrichters (10) an eine Stromversorgungsquelle (L, N, PE), einem Wechselrichter (16) zum Bereitstellen einer Wechselspannung für den Elektromotor (22), und einer mit einem Schutzleiter (PE) der Stromversorgungsquelle (L, N, PE) verbundenen Erdung (PE10), und
eine Stromverbindungseinrichtung (28) zum Verbinden des Elektromotors (22) mit dem Wechselrichter (16) und der Erdung (PE10) des Umrichters (10), wobei die Stromverbindungseinrichtung (28) mehrere Motorphasenleiter (U, V, W) und einen Schutzleiter (PE28) enthält,
**dadurch gekennzeichnet, dass**
ferner ein Ausgangsfilter (34) vorgesehen ist, in dem die mehreren Motorphasenleiter (U, V, W) und der Schutzleiter (PE28) der Stromverbindungseinrichtung (28) jeweils um einen Induktionskern (36) gewickelt sind.

2. Stromversorgungsvorrichtung nach Anspruch 1, bei welcher die mehreren Motorphasenleiter (U, V, W) und der Schutzleiter (PE28) der Stromverbindungseinrichtung (28) in dem Ausgangsfilter (34) um einen gemeinsamen Induktionskern (36) gewickelt sind.

3. Stromversorgungsvorrichtung nach Anspruch 1 oder 2, bei welcher
der Umrichter (10) einen Ausgang (18) aufweist, dessen Ausgangsanschlüsse mit dem Wechselrichter (16) und der Erdung (PE10) verbunden sind,
die Stromverbindungseinrichtung (28) ein Motorkabel (32) aufweist, das zumindest Abschnitte der mehreren Motorphasenleiter (U, V, W) und des Schutzleiters (PE28) enthält und an den Ausgang (18) des Umrichters (10) angeschlossen ist oder anschließbar ist, und
das Ausgangsfilter (34) zwischen dem Wechselrichter (16) und dem Ausgang (18) des Umrichters (10) vorgesehen ist.

4. Stromversorgungsvorrichtung nach Anspruch 3, bei welcher
der Umrichter (10) und das Ausgangsfilter (34) in einem gemeinsamen Umrichtergehäuse (48) angeordnet sind, das mit der Erdung (PE10) des Umrichters (10) verbunden ist.

5. Stromversorgungsvorrichtung nach Anspruch 1 oder 2, bei welcher
der Umrichter (10) einen Ausgang (18) aufweist, dessen Ausgangsanschlüsse mit dem Wechselrichter (16) und der Erdung (PE10) verbunden sind,
die Stromverbindungseinrichtung (28) ein Motorkabel (32) aufweist, das zumindest Abschnitte der mehreren Motorphasenleiter (U, V, W) und des Schutzleiters (PE28) enthält, und
das Ausgangsfilter (34) zwischen dem Ausgang (18) des Umrichters (10) und dem Motorkabel (32) vorgesehen ist.

6. Stromversorgungsvorrichtung nach Anspruch 1 oder 2, bei welcher
der Umrichter (10) einen Ausgang (18) aufweist, dessen Ausgangsanschlüsse mit dem Wechselrichter (16) und der Erdung (PE10) verbunden sind,
die Stromverbindungseinrichtung (28) ein Motorkabel (32) aufweist, das zumindest Abschnitte der mehreren Motorphasenleiter (U, V, W) und des Schutzleiters (PE28) enthält und an den Ausgang (18) des Umrichters (10) angeschlossen ist oder anschließbar ist, und
das Ausgangsfilter (34) in das Motorkabel (32) integriert ist.

7. Stromversorgungsvorrichtung nach einem der Ansprüche 3 bis 6, bei welcher
das Motorkabel (32) der Stromverbindungseinrichtung (28) eine Abschirmung (38) aufweist.

8. Stromversorgungsvorrichtung nach Anspruch 7, bei welcher
die Abschirmung (38) des Motorkabels (32) wenigstens eine Erdungsverbindung (44) zur Verbindung der Abschirmung (38) mit der Erdung (PE10) des Umrichters (10) und/oder mit einem Erdungsanschluss (42) des Elektromotors (22) aufweist.

9. Stromversorgungsvorrichtung nach einem der Ansprüche 3 bis 8, bei welcher
das Motorkabel (32) der Stromverbindungseinrichtung (28) eine ferromagnetische Umhüllung aufweist.

10. Stromversorgungsvorrichtung nach einem der Ansprüche 7 bis 9, bei welcher
der Schutzleiter (PE28) der Stromverbindungseinrichtung zwischen dem Motorkabel (32) und dem Elektromotor (22) mit einer weiteren Abschirmung (50) versehen ist.

11. Stromversorgungsvorrichtung nach einem der vorhergehenden Ansprüche, bei welcher
der Umrichter (10) einen Gleichrichter (14) zum Umwandeln einer Wechselspannung von der Stromversorgungsquelle (L, N, PE) in eine Gleichspannung und einen Gleichspannungszwischenkreis (20) zwischen dem Gleichrichter (14) und dem Wechselrichter (16) aufweist, und
der Schutzleiter (PE28) der Stromverbindungseinrichtung (28) kapazitiv (C5, C6) mit dem Gleichstromzwischenkreis (20) des Umrichters (10) verbunden ist.

12. Motorkabel (32) zum Verbinden eines Elektromotors (22) mit einem Umrichter (10), insbesondere für eine Stromversorgungsvorrichtung nach einem der Ansprüche 1, 2 und 6-11, das mehrere Motorphasenleiter (U, V, W) und einen Schutzleiter (PE28) enthält, wobei die mehreren Motorphasenleiter (U, V, W) und der Schutzleiter (PE28) jeweils zumindest abschnittsweise um einen Induktionskern (36) gewickelt sind.

13. Motorkabelvorrichtung zum Verbinden eines Elektromotors (22) mit einem Umrichter (10), insbesondere für eine Stromversorgungsvorrichtung nach einem der Ansprüche 1, 2, 5 und 7-11, aufweisend:
ein Motorkabel (32) mit mehreren Motorphasenleitern (U, V, W) und einem Schutzleiter (PE28), und
ein Ausgangsfilter (34), das auf einer dem Umrichter (10) zugewandten Seite des Motorkabels (32) vorgesehen ist und in dem die mehreren Motorphasenleiter (U, V, W) und der Schutzleiter (PE28) jeweils um einen Induktionskern (36) gewickelt sind.

14. Umrichtervorrichtung zur Stromversorgung eines Elektromotors (22), insbesondere für eine Stromversorgungsvorrichtung nach einem der Ansprüche 1-4 und 7-11, aufweisend:
einen Umrichter (10) mit einem Eingang (12) zum Anschließen des Umrichters (10) an eine Stromversorgungsquelle (L, N, PE), einem Wechselrichter (16) zum Bereitstellen einer Wechselspannung für den Elektromotor (22), und einer mit einem Schutzleiter (PE) der Stromversorgungsquelle (L, N, PE) verbundenen Erdung (PE10);
Leitungsabschnitte (30) mehrerer Motorphasenleiter (U, V, W), die mit dem Wechselrichter (16) des Umrichters (10) verbunden sind, und eines Schutzleiters (PE28), der mit der Erdung (PE10) des Umrichters (10) verbunden ist; und
ein Ausgangsfilter (34), in dem die mehreren Motorphasenleiter (U, V, W) und der Schutzleiter (PE28) jeweils um einen Induktionskern (36) gewickelt sind.

15. Umrichtervorrichtung nach Anspruch 14, bei welcher
der Umrichter (10) und das Ausgangsfilter (34) in einem gemeinsamen Umrichtergehäuse (48) angeordnet sind, das mit der Erdung (PE10) des Umrichters (10) verbunden ist.
